# EUROPEAN PATENT SPECIFICATION

(11) **EP 4 137 908 B1**
(45) Date of publication and mention of the grant of the patent: **04.06.2025**
(21) Application number: 21787885.9
(22) Date of filing: 13.04.2021
(51) Int. Cl.: B64C 39/02, B64C 3/40, B64C 3/54, B64C 5/14, B64C 5/18, B64U 10/14, B64U 30/12, B64U 40/10, B64U 101/26, G05D 1/00, B64U 30/40

(54) **UNMANNED AIRCRAFT**
UNBEMANNTES LUFTFAHRZEUG
AÉRONEF SANS PILOTE

(30) Priority: 15.04.2020 ES 202030307
(43) Date of publication of application: 22.02.2023
(73) Proprietor: Arborea Intellbird S.L., 37185 Villamayor (Salamanca) (ES)
(72) Inventor: BERNABEU GONZALEZ, Carlos, 37185 Villamayor Salamanca (ES)
(86) International application number: PCT/IB2021/053045
(87) International publication number: WO 2021/209899

(56) References cited:
- WO-A1-2018/163159
- WO-A1-2018/163159
- WO-A1-2020/049600
- CN-U- 203 889 066
- CN-U- 203 889 066
- US-A1- 2006 144 992
- US-A1- 2012 232 721
- US-A1- 2015 331 420
- US-A1- 2017 199 527
- US-A1- 2017 199 527
- US-A1- 2017 300 066
- US-A1- 2017 300 066

## Description

### Technical field

The invention pertains to the field of Unmanned Aerial Vehicles UAV or drones, its subject matter being an aircraft that comprises means allowing it to maintain its nose orientated against the prevailing wind, thus optimizing its capability to support itself on air which is also increased by means to change its wing loading.

### Background art

The inspection of infrastructures constitutes one of many uses of unmanned aircrafts. This is the preferred domain of application of the present invention. To perform inspection operations (which entail taking pictures or acquiring other data) the aircraft must be capable of remaining aloft, which is why multirotor aircrafts, due to their stationary flight capacity are usually chosen for these tasks, as opposed to fixed wing drones, which must remain in constant motion.

Given that remaining aloft causes a high energy consumption, multirotor drones employed on inspections tasks can only perform relatively short-time flights. Such low flight autonomy is enough where the inspection needs little time, for instance, the drone is operating in a small area (such as a windmill inspection). But sometimes a high flight autonomy is required, either because it is a complex inspection or it is performed over a wide area, as would be the case of power line inspection, which requires journeys of up to 100 km per day.

For power line inspection or, generally, for such uses requiring a high flight autonomy, drones known in the art cannot perform satisfactorily: multirotor drones possess the required stationary flight capacity but not enough flight autonomy; fixed wing drones pose difficulties for stationary flight. For these reasons, nowadays power line inspection is carried out with conventional helicopters, which have the required autonomy and stationary flight capacity. However, their use is costly and there is always an accident risk which can cause loss of lives.

State of the art comprises aircrafts having means to improve their supporting capability. Thus, US 5312070A (GRUMMAN AEROSPACE CORP), 17 May 1994 "Segmented variable sweep wing aircraft" discloses an aircraft whose wings are built with a plurality of wing segments articulated to the fuselage. These segments, by way of mechanical means activated by the pilot, can take different positions with respect to each other and to the fuselage: at take-off and landing the segments are separated from each other and perpendicular to the fuselage; whereas in cruise position they are in abutment with each other thereby forming a substantially unitary continuous surface air foil taking an arrow position with respect to the fuselage. This way, the aircraft may vary its wing loading optimizing its performance. Otherwise, as it is a conventional aircraft, its nose is orientated in the direction of travelling, which may or may not coincide with the prevailing wind direction.

The subject matter of US2016347446A1 (VETTER E H et al), 1 December 2016, is a hybrid aircraft having helicopter-type blades and conventional wings. Blades are deployed to allow vertical take-off and landing and they fold up to allow a highspeed flight using the conventional wings. Therefore, in take-off and landing supporting capacity increases by virtue of the deployable helicopter-type blades, which cease to operate during flight.

US9964960B2 (SIKORSKY AIRCRAFT CORP.), 6 April 2017 discloses a fixed-wing, vertical take-off and landing UAV. Fuselage, wings and prop-rotor have surfaces (such as spoilers, ailerons and flaps) automatically controlled by the flight computer, connected to a wind sensor, whereby the wings are oriented according to the wind direction, enabling vertical landing in unfavourable wind conditions.

The first two documents refer to aircrafts having adjustable supporting planes, configured to change the aircraft's wing loading, but said planes operate during take-off or landing, not in flight. On the contrary, in the invention proposed in this patent, the means to change wing loading operate at the flight phase, because it is precisely at this moment, and due to the use given to the aircraft, that a high supporting capability is required, allowing energy savings. Otherwise, aircrafts disclosed in those documents fly by orienting their noses towards the desired direction, as it happens in known aircrafts, rather than orienting their noses against the prevailing wind.

The last-cited document teaches an aircraft having means configured to orientate its position with respect to the wind, comprising means to change its wing loading. But said means of orientation operate at the time of landing, never during flight, the flight being performed with its nose orientated towards the desired direction, regardless of the wind direction.

US2017/0199527A1 (CHANDRA et al), 13 July 2017, «Exploiting or avoiding air drag for an aerial vehicle" teaches a multirotor UAV which has directionality in its shape, whose yaw is determined according to the drag force acting of the UAV, to exploit it or to avoid it. For instance, drag may be avoided by orientating the aircraft's nose towards the net drag force acting on the aircraft or a vector thereof (but not towards the prevailing wind). The UAV does not feature any adjustable supporting plane.

US2017/0300066A1 (LATITUDE ENGINEERING LLC), 19 October 2017, "Wind finding and compensation for unmaned aircraft systems" describes a fixed wing aircraft with VTOL capabilities, without any adjustable supporting planes, having a yaw control system whereby when a high-yaw moment condition is detected the yaw control of the aircraft may be reduced, minimized or turned off (free yaw control mode) leaving the aircraft to weathervane towards the prevailing winds as the effort required to counter the natural stability of the aircraft may be large and therefore energy-consuming.

WO2018/163159A1 (COLUGO SYSTEMS LTD.), 13 September 2018, discloses a multirotor aircraft with folded airwings and means for deploying and folding them. CN203889066U (LIU XAOLIN et al), 22 October 2014 refers to a four-rotor aircraft having rotor membranes that can be unfolded. US2006/0144992A1 (JHA AKHLLESH K et al), 6 July 2006, discloses an aircraft with "transformable fluid foil with pivotable spars". WO2020/049600A1 (FLYGILDI EHF), 12 March 2020, teaches a robotic bird whose wings and tail can be folded and unfolded to different degrees. All these aircraft fly by orienting their noses towards the desired direction, rather than orienting their noses against the prevailing wind.

### Summary of the invention

The subject matter of the invention is an unmanned aircraft, also called drone or UAV Unmanned Aerial Vehicle), as defined in claim 1.

The unmanned aircraft is equipped with means to profit from the lifting force provided by the wind, bringing substantial energy savings and a corresponding increase in flight autonomy, which makes the aircraft particularly suitable to long lasting inspection tasks or inspection tasks requiring long journeys.

The unmanned aircraft is a multirotor UAV having a basic mechanical and electronical configuration no different from known multirotor UAVs.

To maximize the lifting force provided by the wind, the aircraft is equipped with means of orientation against the wind (6) and at least one adjustable supporting plane (7, 8, 9).

To explain the concept of orientation against the wind, a front part of the aircraft, or aircraft nose (5), must be defined. In fixed wing drones, their configuration, equivalent to the design of a traditional airplane, indicates where the nose is. However, multirotor drones, in which this invention is preferably embodied, usually have a round- or prismatic-shaped central body and their multirotor configuration allows them all options of movement along the three spatial axes. This design and this functionality do not lend themselves to the identification of a front part or aircraft nose. In this patent, "aircraft nose" must be understood as a point located in the north end of an imaginary north-south axis cutting through the drone.

Means of orientation against the wind (6) refers to those means that orientate the aircraft nose (5) in such a way that the nose (5) will point towards the direction of provenance of the prevailing wind.

The means of orientation comprise at least a wind speed and direction sensor, or at least a wind speed sensor and at least a wind direction sensor, which will be referred interchangeably as "wind sensor" (6). The wind sensor (6) conveys the acquired magnitudes to the aircraft's automatic control unit (automatic pilot or autopilot) (3) which in turn sends corresponding instructions to the engines to keep the aircraft with its nose (5) orientated against the wind.

In order to optimize the lifting force provided by a headwind, the aircraft will fly with its nose (5) orientated against the wind, even if the direction from which the wind is blowing is not the direction in which the aircraft is flying. Thus, if the wind is blowing from the north and the aircraft must fly in a west direction, the aircraft will orientate its nose (5) northwards and in this position it will fly westwards, therefore it will be flying sideways with respect to the position of its nose (5).

Means of orientation against the wind (6), with the same purpose of optimizing the lifting force provided by a headwind, are supplemented by at least one adjustable supporting plane (7, 8, 9). Adjustable supporting plane (7, 8, 9) is understood as any element providing means of support to the aircraft in addition to the support provided by ordinary elements (such as wings or propellers) and which can adopt at least two deployment positions with respect to the aircraft's central body.

In a preferred embodiment, the aircraft comprises three adjustable supporting planes (7, 8, 9) in the fashion of bird wings and tail. Each of those planes (7, 8, 9) is constituted by segments (10, 11, 12, 13) in the fashion of bird feathers. Each adjustable supporting plane (7, 8, 9) is actuated by a gear mechanism, which in turn is actuated by a servo motor. Reacting to wind speed and wind direction magnitudes captured by the wind sensor (6), the autopilot (3) conveys instructions to the servo motor, which causes the mobile segments (11, 13) to deploy or retract. Therefore, the wing loading of the aircraft will vary according as the variation of the wind, being higher when the wind is lower and vice versa.

The orientation of the aircraft with its nose (5) against the wind and the regulation of its wing loading by the at least one adjustable supporting plane (7, 8, 9) result in a supporting capability whereby the aircraft achieves a neutral balance position. In this way, the aircraft being supported on air primarily by the headwind, the power of the propellers (4) will be substantially destined to drive the aircraft, thus saving energy and increasing flight autonomy.

### Brief description of drawings

FIG. 1: Top view of an aircraft flying, having three supporting planes in a deployment position.
FIG. 2: Detailed perspective view of a gear mechanism to actuate a first supporting plane.
FIG. 3: Detailed side view of same gear mechanism.
FIG. 4: Top view of a rear mechanism to actuate a third supporting plane.

### Description of embodiments

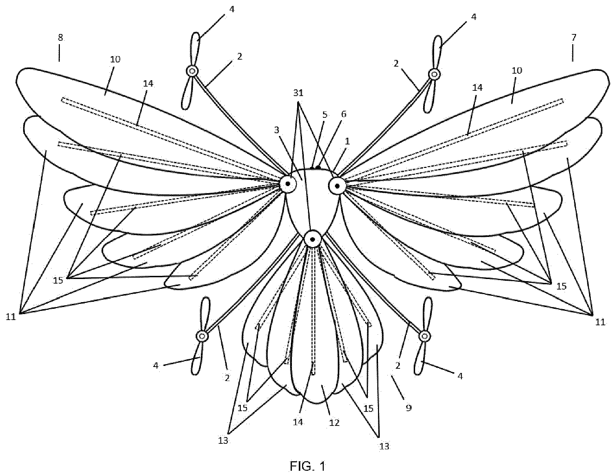

Figure 1 represents a multirotor UAV with four propulsion arms. As known in the art, the UAV comprises a central body (1) out of which emerge the propulsion arms (2). The central body houses, covered by a casing, the automatic pilot or autopilot (3), integrated by hardware and software components normally found in this sort of devices, comprising at least a microcontroller housing a processing unit and memory units, the memory units storing a software with instruction blocks than can be executed by the processing unit.

Each propulsion arm (2) comprises at least an engine associated to at least one propeller (4). Propeller engines are actuated by way of Electronic Speed Control (ESC) devices associated to the autopilot (3). The autopilot (3) is connected to the sensors usually carried by this type of aircraft, such as gyroscopes, accelerometers, barometers, magnetometers and satellite link systems to receive positioning signals from a variety of satellite constellations such as GPS, Glonass, Beidou o Galileo.

The aircraft nose is located in a point (5) of the central body (1) corresponding to the north end of a north-south axis cutting through the drone. Therefore, it must be assumed that the UAV represented in figure 1 is flying with its nose (5) pointing to the north and that the prevailing wind is blowing from the north.

The UAV comprises means of orientation against the wind. Said means comprise a wind sensor (6) which comprises two different sensors: wind speed sensor and wind direction sensor, both having the features known in the art. Same as other sensors carried by the aircraft, this wind sensor (6) is connected to the automatic pilot (3). Therefore, the means of orientation against the wind comprise blocks of instructions in the software housed in the memory unit of the microcontroller, to be processed by the processing unit, so that the aircraft will react to the information received by the wind sensor (6).

The means of orientation against the wind are supplemented by at least one adjustable supporting plane. In the preferred embodiment shown at figure 1, the aircraft possesses three adjustable supporting planes (7, 8, 9) symmetrically located with respect to the aircraft nose (5). A first adjustable supporting plane (7) extends from the right of the central body (1), a second plane (8) is located to the left of the central body (1) and a third plane (9) is located at the rear of the central body (1), always taking into account that the front is where the aircraft nose (5) is located.

Each supporting plane (7, 8, 9) is composed of at least two overlapping segments: specifically, in the embodiment shown at figure 1, there are five overlapping segments on each of the three adjustable supporting planes (7, 8, 9). First and second supporting planes (7, 8) have respective upper segments (10), which are fixed segments, plus four lower segments (11), which move with respect to the fixed ones (10). Third supporting plane (9) has a central segment (12), which is a fixed segment and four side segments (13), which move with respect to the central segment (12). Figure 1 represents the UAV with its mobile segments (11,13) completely deployed with respect to their respective fixed segments (10, 12).

Each supporting plane (7, 8, 9) is actuated by a gear mechanism. To this end, along the longitudinal axis of each segment (10, 11, 12, 13) of said planes (7, 8, 9) there are reinforcement rods (14, 15) joined to the gear mechanism.

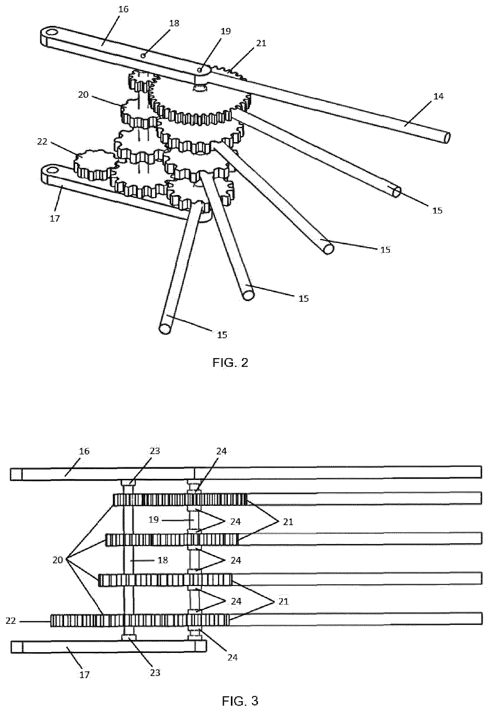

Figure 2 represents one of the rear mechanisms combined with reinforcement rods (14, 15), specifically the mechanism actuating the first supporting plane (7), which is identical to the mechanism actuating the second supporting plane (8). A first rod (14) longitudinally reinforces the upper fixed segment (10). Said rod (14) is joined to an upper flat plate (16) which is attached to the aircraft structure. A first mobile axis (18) and a second fixed axis (19) are fitted between said upper flat plate (16) and a lower flat plate (17) which is also attached to the aircraft structure. Cylindrical gearwheels having different number of parallel teeth are inserted in the axes (18, 19). Specifically, there is a first fixed gearwheels column (20), which are fixedly joint to the mobile axis (18) and a second mobile gearwheels column (21) revolving around the fixed axis (19). Each gearwheel in the first column (20) interlocks with a gearwheel in the second column (21).

Whereas the upper rod (14) is joined to the upper flat plate (16) and thus remains stationary (because the upper flat plate (16) is attached to the aircraft structure), the other rods (15) are joined to respective mobile gearwheels of the second column (21) and therefore they move as said gearwheels (21) rotate, allowing them to fold and unfold with respect to the fixed rod (14).

Connected to one of the fixed gearwheels of the first column (20) a driving wheel (22) is provided, which in turn engages with a servo motor gearwheel. Use of servo motors in UAVs to control the position of certain mobile elements (such as ailerons or, in the present invention, the mobile segments (11, 13) is known in the art. By way of example, above-cited document US9964960B2 describes a servo command element 72 interaction with aircraft mobile surfaces 85, to cause them to move upwards or downwards.

Figure 3 represents a side view of the gear mechanism shown in figure 2. For easy of reference, all reinforcement rods (14, 15) are shown in identical position. A rolling bearing (23) is provided at each end of the first axis (18). The gearwheels (20) of said first axis (18) are fixedly joined to it. The second axis (19) has a rolling bearing (24) by each of its gearwheels (21), the ends of this second axis (19) are fixedly joined to the flat plates (16, 17).

The turn of the driving wheel (22) is transmitted to one of the fixed gearwheels (20), which causes the axis (18) to turn and therefore also causes the other fixed gearwheels (20) to turn, the turning of the axis (18) taking place by way of the rolling bearings (23) at each of its ends. Accordingly, angular velocity of fixed gearwheels of the first column (20) is constant. The turn of each of those wheels (20) is conveyed to its respective mobile gearwheel of the second column (21), said wheels turning independently by way of their respective rolling bearings (24), with an angular velocity determined by the number of their teeth and by the number of teeth in their respective first column gearwheel (20). As seen in figure 1, those mobile segments (11, 13) which are more distant from their respective fixed segments (10, 12) require a wider movement range in order to reach a position of full deployment. A skilled person may design a gear mechanism like the one that has been described, providing wheels (20, 21, 22) with the required number of teeth to achieve the desired movement range of the mobile segments (11, 13).

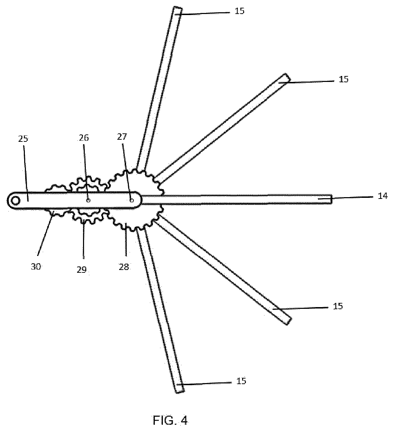

Figure 4 represents a top view of the mechanism to operate the third supporting plane (9), that is, the one located at the rear of the aircraft's central body (1) and which comprises a fixed segment (12) and two mobile segments (13) at each side of the fixed segment (12), the fixed segment (12) being reinforced by a rod (14) and the mobile segments (13) by respective rods (15), as has been described above regarding figure 1. In figure 4 it can be observed that the fixed rod (14) is joined to an upper flat plate (25), which is attached to the aircraft structure. A first mobile axis (26) and a second fixed axis (27) depart from this upper flat plate (25). The mobile rods (15) are joined to respective gearwheels that integrate a second gearwheels column (28) inserted in the second fixed axis (27), each of those gearwheels having its own rolling bearing on said fixed axis (27). This second column of gearwheels (28) interlocks with a first gearwheel column (29) inserted in the first mobile axis (26). The first gearwheel column (29) is connected to a driving gearwheel (30) actuated by a servo motor gearwheel. The mechanism is, therefore, substantially identical to the one represented at figures 2 and 3.

Finally, two fasteners (31) are arranged in the central body (1) of the aircraft. The top ends of the fixed axes (19, 27) of the gear mechanisms operating the respective adjustable supporting planes (7, 8, 9) are attached to the centers of said fasteners (31).

By virtue of the mechanism which has been described, the supporting planes (7, 8, 9) can adopt different deployment positions with respect to the central body (1) of the aircraft. Figure 1 shows a position of full deployment and between that position and the complete folding of the mobile segments (11, 13) over the fixed segments (10, 12) any intermediate degree is possible, according to the number of teeth of the gearwheels (20, 21, 22, 28, 29, 30) and the information that the autopilot (3) receives from the wind sensor (6) and conveys to the servo motor.

Now, the working of the means of orientation against the wind (6) and the supporting planes (7, 8, 9) during take-off and flight of the aircraft shall be explained.

Two phases can be differentiated in the drone operation: take-off and flight. By take-off is understood the phase proceeding from starting-up until the UAV has reached the programmed suitable height.

During take-off, supporting planes (7, 8, 9) are kept in their fully folded position, thus posing less resistance and easing the vertical take-off typical of multirotor UAVs. From the moment that take-off begins, the information about wind direction captured by the wind sensor (6) is processed by the autopilot (3) which sends instructions to the speed controllers of the engines, which by a differential action (rotation at different speeds) will place the aircraft with its nose (5) facing the direction of the wind. Differential action of engines according to the information captured by the sensors and processed by the autopilot or according to the instructions received from the remote pilot is the basic operational principle of these aircrafts and is therefore known to the skilled person.

When the aircraft has reached a suitable specific height programmed in the autopilot (3) software, the take-off phase ends and the flight phase begins, that is, the phase in which the aircraft remains stationary on air or moves in one or other direction.

During the flight phase, wind direction is constantly monitored by the wind sensor (6), so that a variation in wind direction will be captured by the sensor (6) and conveyed to the automatic pilot (3), which will process it and will send orders to the speed controllers of the engines, causing a variation in the aircraft orientation, so that its nose (5) is always kept positioned against the wind.

Likewise and simultaneously to the described monitorization of wind direction and resulting aircraft orientation, the information about wind speed is also constantly monitored by the wind sensor (6) and processed by the autopilot (3), which sends instructions to the servo motors connected to respective driving gearwheels (22, 30), which by the action of the gear mechanisms herein described will cause the mobile segments (11, 13) of the supporting planes (7, 8, 9) to move, in such a way that the degree of deployment of said mobile segments (11, 13) will change according to the wind speed, pursuant to the principle that to a lesser wind, a wider deployment. As the wind increases, the deployment of the mobile segments (11, 13) will decrease until the highest programmed degree of retraction has been reached.

To this end, to a specific value of wind speed, the microcontroller (3) software has been programmed to assign a specific degree of deployment of segments (11, 13). Such calculation of an aircraft wing loading according to wind speed is known by the skilled person.

Once the aircraft is in stationary flight at the point where the inspection is due to begin, assuming that the wind is blowing from the north at low speed, and that the aircraft must travel along a westward power line, at that moment the aircraft would find itself with its nose (5) oriented to the north and with fully deployed supporting planes (7, 8, 9). From that moment, aircraft would fly westbound, without changing the orientation of its nose (5) because, as indicated, the software of the automatic pilot (3) is programmed to keep it against the wind according to the information received from the wind sensor (6). For this reason, the aircraft, when moving westbound along the power line, would be performing a side flight with respect to the orientation of its nose (5).

As an exception to the above, the software of the automatic pilot (3) is programmed in such a way that in the event that wind speed captured by wind sensor (6) is lower than the aircraft flying speed, the aircraft nose (5) is orientated in the direction of travelling, instead of against the wind. This exception has been contemplated because the low wind would hardly contribute to supporting the aircraft, even if its supporting planes (7, 8, 9) are totally deployed. It is more efficient to orientate the aircraft towards its travelling direction and profit from the wind to help aircraft planning, which also brings energy savings.

## Claims

1. Unmanned aircraft comprising a central body (1) out of which emerge propulsion arms (2), the central body having an aircraft nose (5); a wind sensor (6) comprising either a wind speed and direction sensor or a wind speed sensor and a wind direction sensor, each propulsion arm (2) comprising at least one engine associated to at least one propeller (4); a microcontroller having an automatic pilot (3), the engines being actuated by way of Electronic Speed Control (ESC) devices associated to the automatic pilot (3) **characterized in that** the automatic pilot (3) is configured to acquire data of the wind sensor and to send corresponding instructions to the Electronic Speed Control (ESC) devices of the engines which by a differential action will maintain the aircraft with its nose (5) orientated towards the direction of the prevailing wind regardless of the direction in which the aircraft is flying; and **in that** the aircraft comprises at least one adjustable supporting plane (7, 8, 9) comprising mobile segments, wherein the microcontroller is configured to assign a specific degree of deployment of the mobile segments (11, 13) according to the wind speed.

2. The aircraft of claim 1, **characterized in that** the microcontroller is configured to come into operation at the take-off phase and to keep operating during the flight phase.

3. The aircraft of claim 1, **characterized in that** the microcontroller is so configured that, when the prevailing wind speed is lower than the aircraft flying speed, the aircraft nose (5) is orientated in the direction of travelling.

4. The aircraft of claim 1 **characterized in that** the at least one adjustable supporting plane (7, 8, 9) is constituted by at least two overlapping segments (10, 11, 12, 13).

5. The aircraft of claim 4, **characterized in that** one (10, 12) of the at least two overlapping segments (10, 11, 12, 13) is a fixed segment and the other (11, 13) of the at least two overlapping segments (10, 11, 12, 13) is a mobile segment with respect to the at least one fixed segment (10, 12).

6. The aircraft of claim 5, **characterized in that** the at least one mobile segment (11, 13) is configured to adopt at least two deployment positions with respect to the at least one fixed segment.

7. The aircraft of claim 5, **characterized in that** the at least one mobile segment (11, 13) is joined to a gear mechanism comprising a first mobile axis (18, 26) and a second fixed axis (19, 27), into which a first fixed gearwheels column (20, 29) and a second mobile gearwheels column (21, 28) are respectively inserted.

## Patentansprüche

1. Unbemanntes Luftfahrzeug bestehend aus einem Zentralkörper (1), aus dem Antriebsarme (2) herausragen, wobei der Zentralkörper eine Flugzeugnase (5) aufweist; einem Windsensor (6), der entweder einen Windgeschwindigkeits- und Richtungssensor oder einen Windgeschwindigkeitssensor und einen Windrichtungssensor umfasst, wobei jeder Antriebsarm (2) mindestens einen Motor aufweist, der mindestens einem Propeller (4) zugeordnet ist; einem Mikrocontroller mit einem Autopiloten (3), wobei die Motoren über dem Autopiloten (3) zugeordnete elektronische Geschwindigkeitsregler (Electronic Speed Control, ESC) angesteuert werden, **dadurch gekennzeichnet, dass** der Autopilot (3) so konfiguriert ist, dass er Daten des Windsensors erfasst und entsprechende Anweisungen an die elektronischen Geschwindigkeitsregler (ESC) der Motoren sendet, die durch eine Differenzialwirkung das Luftfahrzeug mit der Nase (5) in Richtung des vorherrschenden Windes ausgerichtet halten, unabhängig davon, in welche Richtung das Luftfahrzeug fliegt; und darin, dass das Luftfahrzeug mindestens eine verstellbare Tragfläche (7, 8, 9) mit beweglichen Segmenten umfasst, wobei der Mikrocontroller so konfiguriert ist, dass er einen bestimmten Grad der Entfaltung der beweglichen Segmente (11, 13) in Abhängigkeit von der Windgeschwindigkeit zuweist.

2. Luftfahrzeug nach Anspruch 1, **dadurch gekennzeichnet, dass** der Mikrocontroller so konfiguriert ist, dass er in der Startphase in Betrieb genommen wird und während der Flugphase in Betrieb bleibt.

3. Luftfahrzeug nach Anspruch 1, **dadurch gekennzeichnet, dass** der Mikrocontroller so konfiguriert ist, dass wenn die vorherrschende Windgeschwindigkeit geringer ist als die Fluggeschwindigkeit des Luftfahrzeugs, die Flugzeugnase (5) in Fahrtrichtung ausgerichtet wird.

4. Luftfahrzeug nach Anspruch 1, **dadurch gekennzeichnet, dass** die mindestens eine verstellbare Tragfläche (7, 8, 9) aus mindestens zwei sich überlappenden Segmenten (10, 11, 12, 13) besteht.

5. Luftfahrzeug nach Anspruch 4, **dadurch gekennzeichnet, dass** ein Segment (10, 12) der mindestens zwei sich überlappenden Segmente (10, 11, 12, 13) ein festes Segment ist und das andere Segment (11, 13) der mindestens zwei sich überlappenden Segmente (10, 11, 12, 13) ein bewegliches Segment in Bezug auf das mindestens eine feste Segment (10, 12) ist.

6. Luftfahrzeug nach Anspruch 5, **dadurch gekennzeichnet, dass** das mindestens eine bewegliche Segment (11, 13) so konfiguriert ist, dass es mindestens zwei Entfaltungspositionen in Bezug auf das mindestens eine feste Segment einnimmt.

7. Luftfahrzeug nach Anspruch 5, **dadurch gekennzeichnet, dass** das mindestens eine bewegliche Segment (11, 13) mit einem Getriebemechanismus verbunden ist, der eine erste bewegliche Achse (18, 26) und eine zweite feste Achse (19, 27) umfasst, in die jeweils eine erste feste Zahnrädersäule (20, 29) und eine zweite bewegliche Zahnrädersäule (21, 28) eingesetzt sind.

## Revendications

1. Un aéronef sans pilote comprenant un corps central (1) d'où émergent des bras de propulsion (2), le corps central ayant un nez d'aéronef (5) ; un capteur de vent (6) comprenant soit un capteur de vitesse et de direction du vent, soit un capteur de vitesse du vent et un capteur de direction du vent, chaque bras de propulsion (2) comprenant au moins un moteur associé à au moins une hélice (4) ; un microcontrôleur ayant un pilote automatique (3), les moteurs étant actionnés par l'intermédiaire de dispositifs électroniques de contrôle de vitesse (Electronic Speed Control, ESC) associés au pilote automatique (3) **caractérisé en ce que** le pilote automatique (3) est configuré pour acquérir des données du capteur de vent et pour envoyer les instructions correspondantes aux dispositifs électroniques de contrôle de vitesse (ESC) des moteurs qui, par une action différentielle, maintiendront l'aéronef avec le nez (5) orienté vers la direction du vent dominant, quelle que soit la direction dans laquelle l'aéronef vole ; et **en ce que** l'aéronef comprend au moins un plan de support réglable (7, 8, 9) comprenant des segments mobiles, dans lequel le microcontrôleur est configuré pour attribuer un degré spécifique de déploiement des segments mobiles (11, 13) en fonction de la vitesse du vent.

2. L'aéronef de la revendication 1, **caractérisé en ce que** le microcontrôleur est configuré pour entrer en fonctionnement à la phase de décollage et pour continuer à fonctionner pendant la phase de vol.

3. L'aéronef de la revendication 1, **caractérisé en ce que** le microcontrôleur est configuré de telle sorte que, lorsque la vitesse du vent dominant est inférieure à la vitesse de vol de l'aéronef, le nez de l'aéronef (5) est orienté dans la direction de déplacement.

4. L'aéronef de la revendication 1, **caractérisé en ce que** l'au moins un plan de support réglable (7, 8, 9) est constitué d'au moins deux segments en chevauchement (10, 11, 12, 13).

5. L'aéronef de la revendication 4, **caractérisé en ce que** l'un (10, 12) des au moins deux segments en chevauchement (10, 11, 12, 13) est un segment fixe et l'autre (11, 13) des au moins deux segments en chevauchement (10, 11, 12, 13) est un segment mobile par rapport à l'au moins un segment fixe (10, 12).

6. L'aéronef de la revendication 5, **caractérisé en ce que** l'au moins un segment mobile (11, 13) est configuré pour adopter au moins deux positions de déploiement par rapport à l'au moins un segment fixe.

7. L'aéronef de la revendication 5, **caractérisé en ce que** l'au moins un segment mobile (11, 13) est relié à un mécanisme d'engrenage comprenant un premier axe mobile (18, 26) et un deuxième axe fixe (19, 27), dans lequel une première colonne de roues dentées fixes (20, 29) et une seconde colonne de roues dentées mobiles (21, 28) sont respectivement insérées.
